Europäisches Patentamt

European Patent Office

Office européen des brevets

(11) Veröffentlichungsnummer: **0 258 538**
**B1**

# EUROPÄISCHE PATENTSCHRIFT

(45) Veröffentlichungstag der Patentschrift:
**13.12.89**

(21) Anmeldenummer: **87107452.2**

(22) Anmeldetag: **22.05.87**

(51) Int. Cl.⁴: **B60T 5/00**, B62D 35/00,
F16D 65/847

(54) Vorrichtung zum Zuführen von Kühlluft zu einer Bremsscheibe.

(30) Priorität: **05.09.86 DE 3630334**

(43) Veröffentlichungstag der Anmeldung:
**09.03.88 Patentblatt 88/10**

(45) Bekanntmachung des Hinweises auf die Patenterteilung:
**13.12.89 Patentblatt 89/50**

(84) Benannte Vertragsstaaten:
**DE ES FR GB IT SE**

(56) Entgegenhaltungen:
**DE-A- 3 321 750
DE-A- 3 525 627
DE-B- 2 830 450
FR-A- 2 281 520
US-A- 2 136 472**

(73) Patentinhaber: **Dr.Ing.h.c. F. Porsche
Aktiengesellschaft, Porschestrasse 42,
D-7000 Stuttgart 40(DE)**

(72) Erfinder: **Moedinger, Wolfgang, Endersbacher Strasse 8,
D-7056 Weinstadt(DE)**
Erfinder: **Lechner, Reinhard, Dipl.-Ing. FH,
Haidachstrasse 1, D-7530 Pforzheim(DE)**
Erfinder: **Preiss, Michael, Dipl.-Ing., Hinter der Mühle 10,
D-7143 Vaihingen/Enz-Aurich(DE)**

ACTORUM AG

## Beschreibung

Die Erfindung bezieht sich auf eine Vorrichtung nach dem Oberbegriff des Anspruchs 1.

Aus der FR-A 2 281 520 ist eine gattungsgemäße Vorrichtung zum Zuführen von Kühlluft zu einer Bremsscheibe einer Bremse, insbesondere zu einer Vorderradbremse, bekannt. Über einen teilweise flexibel ausgebildeten Luftleitkanal, der eingangsseitig eine (erste) Luftöffnung und ausgangsseitig eine der Bremsscheibe zugerichtete weitere Luftöffnung aufweist, wird die Kühlluft zugeführt. Der Luftleitkanal weist mehrere starre Kanalabschnitte auf, die fahrzeugfest am Aufbau sowie benachbart der Bremsscheibe an einem Schutzblech gehalten und miteinander jeweils über einen flexiblen Zwischenabschnitt des Kanals verbunden sind, in der Weise, daß die beiden Kanalabschnitte relativ zueinander bewegbar sind.

Aus der DE-A 3 525 627 ist eine Kühlluftzuführung zu den Radbremsen eines Kraftfahrzeugs über eine starre Luftleitvorrichtung am Fahrzeugbug bekannt, die eine quer zum Fahrzeug angeordnete Luftleitschiene umfaßt, welche mit weiteren den Radbremsen zugerichteten Leitschaufeln zusammenarbeitet.

Des weiteren ist aus der DE-B 2 830 450 eine starre Luftleitvorrichtung zum Zuführen von Kühlluft zu Radbremsen bekannt, die aus einem hohl ausgebildeten Radführungslenker besteht, der einen entgegen der Fahrtrichtung geöffneten Lufteintritt und einen einer Bremse zugerichteten Luftaustritt aufweist.

Der Erfindung liegt die Aufgabe zugrunde, einen Luftleitkanal zur Zwangskühlung von Bremsen zu schaffen, die trotz eines relativ großen Querschnitts eine Behinderung sich bewegender Fahrzeugteile wie Lenker, Antriebswelle, Rad ausschließt und vom Bug des Fahrzeugs aus bis zur Vorderradbremse behinderungsfrei geführt wird. Des weiteren soll der Kanal platzsparend im Fahrzeug anzuordnen sein und aus einfach zusammensetzbaren Teilen bestehen, die zum Teil eine Vormontage außerhalb des Fahrzeugs ermöglichen, aber auch bei einem Abbau von Bauelementen einfach voneinander zu trennen sind.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß der Luftleitkanal im Bereich sich bewegender Teile an denselben befestigt wird, so daß ein Anschlagen an diese Bauelemente, wie z.B. an einen Lenker, ein Rad, ausgeschlossen wird. Die Befestigung des mittleren starren Kanalabschnitts unmittelbar auf dem Lenker hat bei einem Allradfahrzeug noch den Vorteil, daß der knappe Bauraum in diesem Bereich des Aufbaus gut ausgenutzt wird und die darüberliegende Antriebswelle eine optimale Lage einnimmt und darüber hinaus nicht behindert ist. Auch können der mittlere sowie der hintenliegende starre Kanalabschnitt vor dem Einbau am Bauteil vormontiert werden, sodaß zur Erzielung eines durchgehenden Luftleitkanals am Fahrzeug nur noch die flexiblen Abschnitte zwischengesetzt und mit den starren Kanalabschnitten verbunden werden müssen.

Die so gebildete Luftführung über den Kanal ist vom Bug bis zur Bremsscheibe ununterbrochen. Im Bereich unmittelbar hinter der Bremsscheibe erfolgt eine großflächige Beaufschlagung mittels zweier quergerichteter Luftströme. Diese führen die Kühlluft sowohl auf die Bremsfläche als auch in die Kanäle zwischen die beiden Bremsscheibenringe, wodurch eine optimierte Kühlung der gesamten Bremsscheibe gewährleistet ist.

Ein Ausführungsbeispiel der Erfindung ist in der Zeichnung dargestellt und wird im folgenden näher beschrieben.

Es zeigen:

Fig. 1 eine Seitenansicht eines Kraftfahrzeugs mit einem Luftleitkanal,

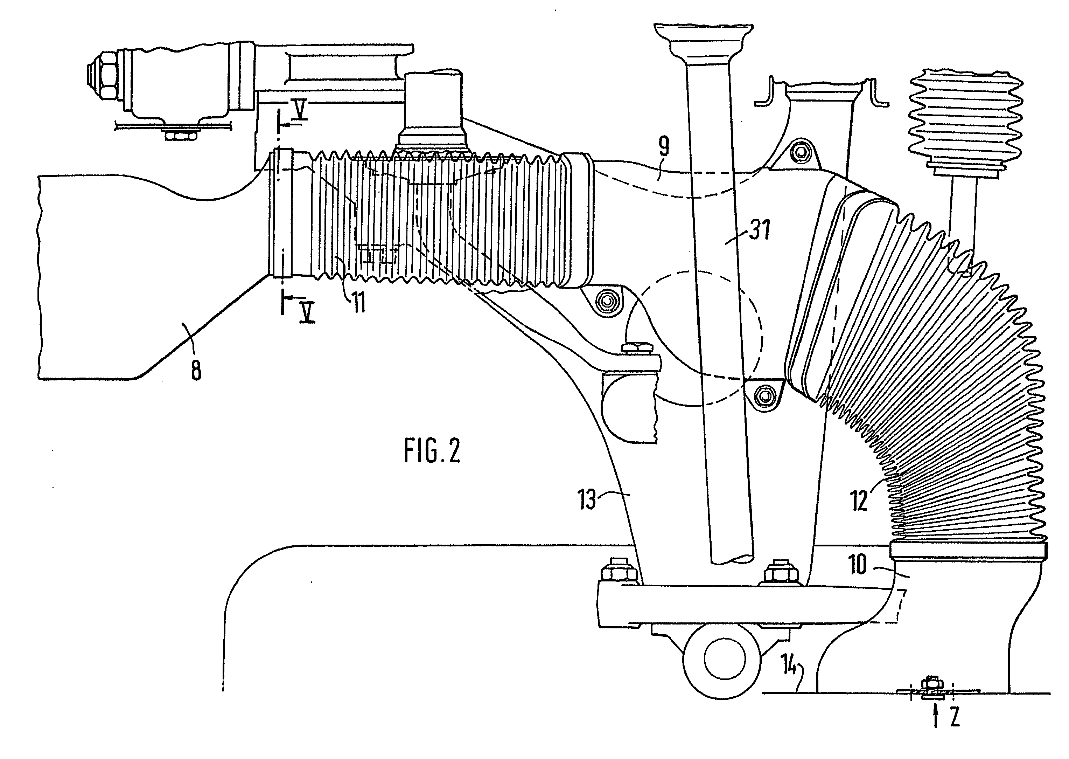

Fig. 2 eine Draufsicht auf den Luftleitkanal,

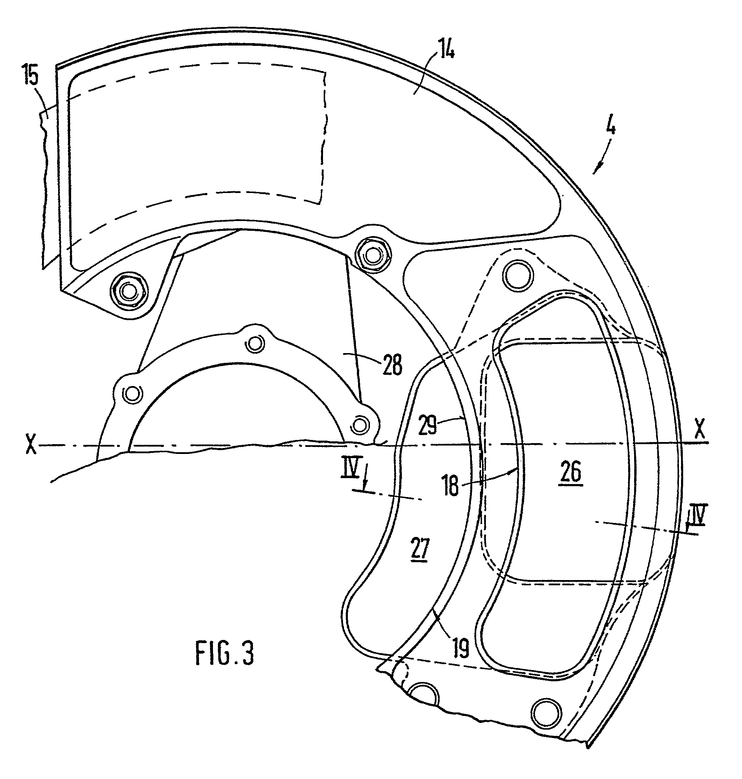

Fig. 3 eine Ansicht in Pfeilrichtung Z der Fig. 2 gesehen,
Fig. 4 einen Schnitt nach der Linie IV–IV der Fig. 3 und
Fig. 5 einen Schnitt nach der Linie V–V der Fig. 2 durch den vorderen starren Kanalabschnitt.

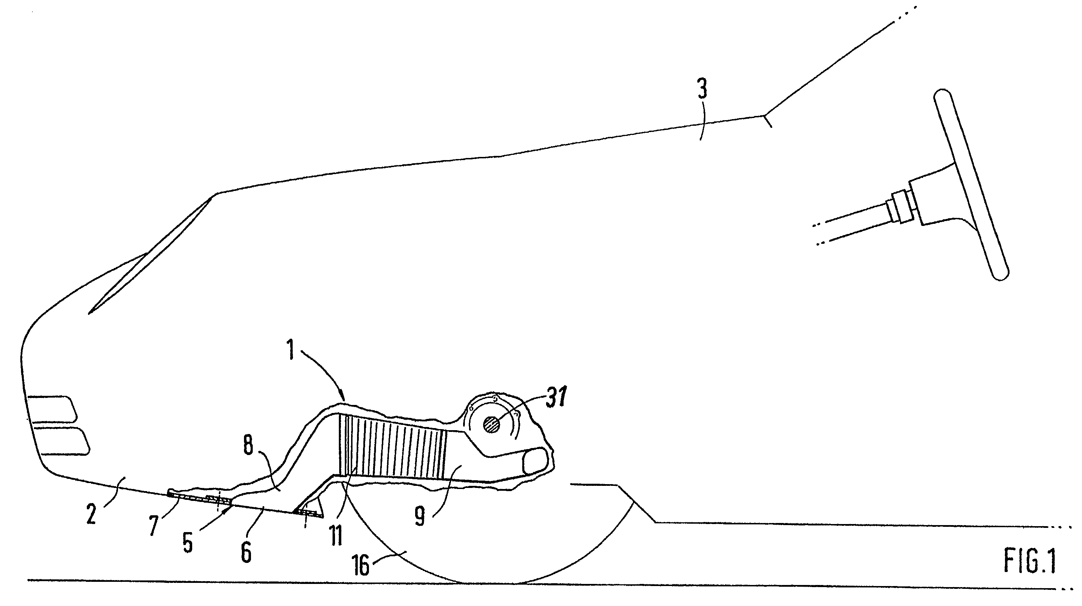

Wie Fig. 1 zeigt, ist der Luftleitkanal 1 vom Bug 2 des Fahrzeugs 3 bis zur Bremse 4 ununterbrochen ausgebildet, wobe ein Lufteinlaß 5 über eine Öffnung 6 im unteren Abschlußblech des Fahrzeugaufbaus 7 erfolgt. Der Kanal 1 umfaßt im wesentlichen mehrere starre Kanalabschnitte 8, 9 und 10, die über flexible Zwischenabschnitte 11 und 12 miteinander zu dem durchgehenden Luftleitkanal 1 verbunden werden.

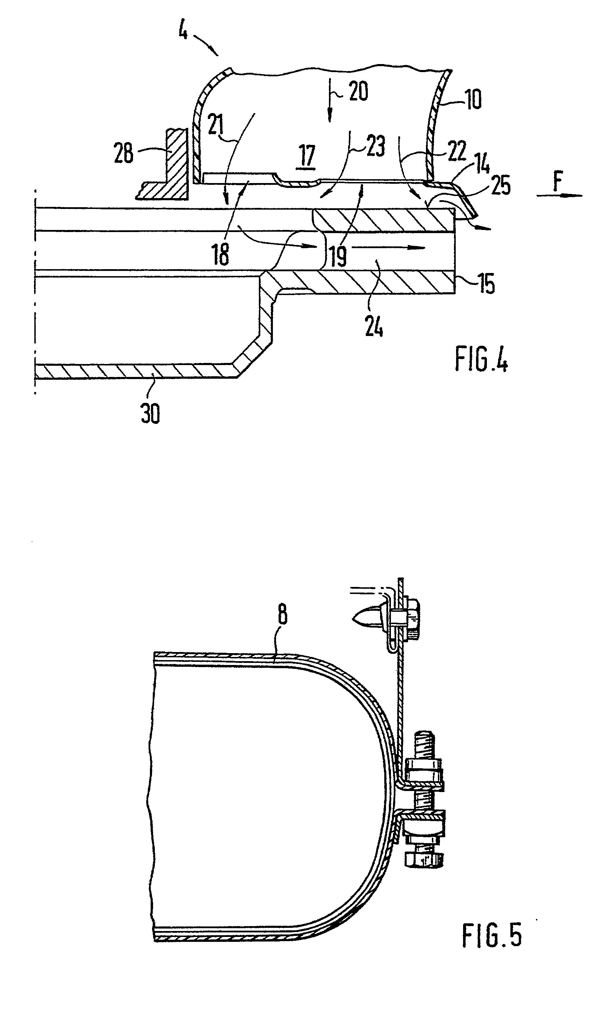

Der mittlere und der hintenliegende starre Kanalabchnitt 9 und 10 sind jeweils radseitig befestigt, wobei der Abschnitt 9 mit dem Querlenker 13 und der weitere Abschnitt 10 mit dem Schutzblech 14 der Bremsscheibe 15 über Schrauben verbunden ist. Der dritte vornliegende Kanalabschnitt 8 ist am Abschlußblech des Aufbaus 7 gehalten und zusätzlich an einem Halter zum Aufbau hin abgestützt, wie Fig. 5 näher zeigt.

Der Luftleitkanal 1 ist so angeordnet, daß er vom Bug 2 des Fahrzeugs 3 über den Querlenker 13 bis hin zur Bremsscheibe 15 geführt wird, wobei die Auslaßöffnung 17 des Kanals 1 etwa in einer horizontalen Mittelebene X–X des Rades 16 bzw. der Bremsscheibe 15 liegt. Insbesondere ist der Kanal 1 zwischen dem Lenker 13 und einer Antriebswelle 31 angeordnet, wobei diese bei geringem Bauraum unbehindert bleibt.

Der vordere starre Kanalabschnitt 8 verläuft von der Einlaßöffnung 5 bis zum flexiblen Kanalabschnitt 11 in etwa mit einem gleichen Querschnitt. Der hintere Kanalabschnitt ist vorzugsweise als Diffusor ausgeführt, dessen Auslaßöffnung 17 zwei Einlaßöffnungen 18 und 19 im Schutzblech 14 gegenüberstehen. Diese Lufteinlaßöffnungen 18 und 19 werden durch zwei bogenförmige Öffnungsschlitze 26 und 27 gebildet, wobei der eine äußere Öffnungsschlitz 26 im Bereich einer inneren Bremsfläche 25 der Bremsscheibe 15 angeordnet ist und der weitere innere Öffnungsschlitz 27 zwischen einem Radträger 28 und einer inneren Begrenzungskante 29 des Schutzbleches 14 im Bereich einer offenen Bremsnabe 30 liegt.

Die Einlaßöffnungen 18 und 19 teilen den ankommenden Luftstrom 20 in einen inneren Luftstrom 21 und einen äußeren Luftstrom 22 auf, wobei dieser Luftstrom 22 einen Teilstrom 23 aufweist, der den inneren Luftstrom 21 ergänzen kann. Hierdurch wird eine optimierte Zuführung von Kühlluft sowohl in die radialen Kanäle 24 zwischen den beiden Bremsscheibenringen als auch zur äußeren Bremsscheibenfläche 25 erzielt, wie es in Fig. 4 näher dargestellt ist.

Die starren Kanalabschnitte 8, 9 und 10 bewegen sich entsprechend der Bewegung der Bauteile an denen sie befestigt sind, wobei durch die flexiblen Zwischenabschnitte 11 und 12 Relativbewegungen so ausgeglichen werden, daß immer ein durchgehender Luftleitkanal 1 gewährleistet ist. Diese flexiblen Zwischenabschnitte 11 und 12 sind vorzugsweise aus flexiblen Schläuchen gebildet, die aus Kunststoff bestehen und Drahteinlagen aufweisen. Hierdurch wird erreicht, da ßsich z.B. bei einem Radeinschlag der hintenliegende starre Kanalabschnitt 10 entsprechend der Randbewegung verstellen kann, wobei der mittlere Kanalabschnitt 9 sich gleichzeitig entsprechend der Radeinfederung verstellt. Durch die flexiblen Zwischenabschnitte 11, 12 wird bei jeder Lage der Kanalabschnitte 8, 9 und 10 eine durchgehende Luftführung ohne Querschnittsverringerung des Kanals 1 erzielt.

**Patentansprüche**

1. Vorrichtung zum Zuführen von Kühlluft zu einer Bremsscheibe einer Bremse, insbesondere zu einer Vorderradbremse, über einen Luftleitkanal (1), der eingangsseitig eine erste Luftöffnung (6) und ausgangsseitig eine der Bremsscheibe zugerichtete weitere Luftöffnung (21, 22) aufweist, wobei der Luftleitkanal (1) starre Kanalabschnitte (8 bis 10) umfaßt, die fahrzeugfest am Aufbau (7) sowie benachbart der Bremsscheibe (15) an einem Schutzblech (14) gehalten und miteinander jeweils über einen flexiblen Zwischenabschnitt (11, 12) des Luftleitkanals (1) verbunden sind, derart, daß die starren Kanalabschnitte (8 bis 10) relativ zueinander bewegbar sind, dadurch gekennzeichnet, daß die eingangsseitige erste Luftöffnung (6) im Bug des Fahrzeuges angeordnet ist und daß der Luftleitkanal (1) zumindest drei starre Kanalabschnitte (8 bis 10) umfaßt, wobei ein mittlerer starrer Kanalabschnitt (9) radseitig an einem Querlenker des Kraftfahrzeuges gehalten ist.

2. Vorrichtung nach Anspruch 1, dadurch gekennzeichnet, daß der mittlere starre Kanalabschnitt (9) zwischen dem Querlenker (13) und einer Antriebswelle (31) der Vorderachse angeordnet ist.

3. Vorrichtung nach den Ansprüchen 1 oder 2, dadurch gekennzeichnet, daß der am Schutzblech (14) befestigte weitere, hintenliegende Kanalabschnitt (10) mit seiner Auslaßöffnung (17) mehreren Lufteinlaßöffnungen (18, 19) im Schutzblech (14) gegenübersteht, die eine getrennte Luftführung (21, 22) zur Bremsscheibe (15) in Fahrzeugquerrichtung bilden.

4. Vorrichtung nach Anspruch 3, dadurch gekennzeichnet, daß die Lufteinlaßöffnungen (18, 19) aus zwei bogenförmigen Öffnungsschlitzen (26, 27) im Schutzblech (14) bestehen und der äußere Öffnungsschlitz (26) im Bereich einer äußeren Bremsfläche (25) der Bremsscheibe (15) angeordnet ist und der innere Öffnungsschlitz (27) zwischen einem Radträger (28) und einer inneren Begrenzungskante (29) des Schutzblechs (14) im Bereich einer offenen Bremsnabe (30) gebildet wird.

5. Vorrichtung nach einem oder mehreren der vorhergehenden Ansprüche, dadurch gekennzeichnet, daß das Endteil des hinten liegenden starren Kanalabschnitts (10) als Diffusor ausgebildet ist, dessen Auslaßöffnung (17) etwa in einer horizontalen Ebene (X–X) der Bremsscheibe (15) liegt und die beiden Lufteinlaßöffnungen (18, 19) im Schutzblech (14) umschließt.

6. Vorrichtung nach einem oder mehreren der vorhergehenden Ansprüche, dadurch gekennzeichnet, daß die beiden Zwischenabschnitte (11 und 12) des Luftleitkanals (1) aus flexiblen Schläuchen gebildet sind, aus Kunststoff bestehen und Drahteinlagen aufweisen.

7. Vorrichtung nach einem oder mehreren der vorhergehenden Ansprüche, dadurch gekennzeichnet, daß der am Fahrzeugaufbau (7) gehaltene vornliegende starre Kanalabschnitt (8) bugseitig des Fahrzeugs (3) eine Lufteinlaßöffnung (6) im unteren Abschlußblech des Fahrzeugaufbaus (7) aufweist und diese Öffnung (6) – in Fahrtrichtung (F) gesehen – vor dem Rad (16) angeordnet und der Fahrbahn zugerichtet ist.

**Claims**

1. An arrangement for supplying cooling air to a brake disc of a brake, in particular to a front wheel brake, via an air duct (1) which comprises a first air opening (6) on the inlet side and a further air opening (21, 22) facing the brake disc on the outlet side, wherein the air duct (1) comprises rigid duct portions (8 to 10) which are held rigidly on the vehicle body (7) and adjacent to the brake disc (15) on a protective plate (14) and are connected to one another via a respective flexible intermediate portion (11, 12) of the air duct (1) in such a way that the rigid duct portions (8 to 10) are movable relative to one another, characterised in that the first air opening (6) on the inlet side is arranged in the nose of the vehicle and in that the air duct (1) comprises at least three rigid duct portions (8 to 10), a central rigid duct portion (9) being held on a transverse arm of the motor vehicle on the wheel side.

2. An arrangement according to Claim 1, characterised in that the central rigid duct portion (9) is arranged between the transverse arm (13) and a drive shaft (31) of the front axle.

3. An arrangement according to Claims 1 or 2, characterised in that the further duct portion (10) which is fixed on the protective plate (14) and is located at the rear, with its outlet opening (17) opposes several air inlet openings (18, 19) in the protective plate (14), the air inlet openings (18, 19) forming a separate air guide means (21, 22) to the brake disc (15) in the transverse direction of the vehicle.

4. An arrangement according to Claim 3, characterised in that the air inlet openings (18, 19) consist of two arcshaped opening slots (26, 27) in the protective plate (14), and the outer opening slot (26) is arranged in the region of an outer brake face (25) of the brake disc (15), and the inner opening slot (27) is formed between a wheel holder (28) and an inner limiting edge (29) of the protective plate (14) in the region of an open brake hub (30).

5. An arrangement according to one or more of the preceding claims, characterised in that the end of the rigid duct portion (10) located at the rear is constructed as a diffuser, the outlet opening (17) of which lies roughly in a horizontal plane (X–X) of the brake disc (15) and surrounds the two air inlet openings (18, 19) in the protective plate (14).

6. An arrangement according to one or more of the preceding claims, characterised in that the two intermediate portions (11 and 12) of the air duct (1) are formed from flexible tubes, consist of plastics material and have wire inlays.

7. An arrangement according to one or more of the preceding claims, characterised in that the rigid duct portion (8) located at the front and held on the vehicle body (7) has an air inlet opening (6) in the lower terminal plate of the vehicle body (7) at the nose end of the vehicle (3) and this opening (6) is arranged in front of the wheel (16) — as viewed in the direction of travel (F) — and is directed toward the roadway.

**Revendications**

1. Dispositif pour amener l'air de refroidissement sur un disque de frein, en particulier sur un disque de frein de roue avant, par l'intermédiaire d'une canalisation d'air (1), présentant à l'entrée un premier orifice de passage d'air (6) et à la sortie un autre orifice de passage d'air (21, 22) orienté vers le disque de frein, ladite canalisation d'air (1) comportant des segments de canalisation rigides (8 à 10) qui sont fixés respectivement d'une manière rigide, à la carosserie (7) de la voiture et au voisinage du disque de frein (15) à une tôle de protection (14), et réunis entre eux au moyen de segments intermédiaires flexibles (11, 12) faisant également partie de ladite canalisation d'air (1), de sorte que les segments rigides (8 à 10) de la canalisation peuvent se déplacer les uns par rapport aux autres, caractérisé par le fait que le premier orifice de passage d'air (6) du côté de l'entrée, est disposé dans la partie avant du véhicule et que la canalisation d'air (1) comprend au minimum trots segments de canalisation rigides (8 à 10), avec un segment rigide médian (9) de ladite canalisation fixé du côté de la roue, à un arbre oscillant transversal du véhicule.

2. Dispositif selon la revendication 1, caractérisé par le fait que le segment rigide médian (9) de la canalisation est disposé entre le bras oscillant transversal (13) et un arbre d'entraînement (31) de l'essieu avant.

3. Dispositif selon la revendication 1 ou 2, caractérisé par le fait que l'autre segment de canalisation (10) qui se trouve plus en arrière, fixé à la tôle de protection (14), fait face avec son orifice de sortie (17) à un certain nombre d'otifices d'admission d'air (18, 19) pratiqués dans la tôle de protection (14), qui constituent un guidage séparé (21, 22) de l'air vers le disque de frein (15) dans le sens transversal.

4. Dispositif selon la revendication 3, caractérisé par le fait que les orifices d'admission d'air (10, 19) sont constitués par deux fentes de passage en forme d'arc (26, 27) prévues dans la tôle de protection (14), que la fente de passage supérieure (26) est disposée dans la région d'une surface de freinage extérieure (25) du disque de frein (15) et que la fente d'admission intérieure (27) est formée entre un support de roue (28) et un bord intérieur (29) délimitant la tôle de protection (14) dans la région d'un moyeu de frein ouvert (30).

5. Dispositif selon une ou plusieurs des revendications ci-dessus, caractérisé par le fait que la partie terminale du segment de canalisation rigide (10) qui se trouve en dernier est réalisée en forme de diffuseur, dont l'orifice de sortie (17) est situé approximativement dans un plan horizontal (X–X) du disque de frein (15) et entoure les deux orifices d'admission d'air (18, 19) prévus dans la tôle de protection (14).

6. Dispositif selon une ou plusieurs des revendications ci-dessus, caractérisé par le fait que les deux segments intermédiaires (11 et 12) de la conduite d'air (1) sont constitués par des tuyaux flexibles en matière synthétique renforcés par des fils métalliques.

7. Dispositit selon une ou plusieurs des revendications ci-dessus caractétisé par le fait que le segment de canalisation rigide (8) qui se trouve en tête, fixé à la carosserie (7) du véhicule, présente dans la partie avant (3) du véhicule un orifice d'entrée d'air (6) pratiqué dans la tôle de fermeture iniérieure de la carrosserie (7) et qui se trouve en avant, dans le sens de la marche, par rapport à la roue (16) et qui est orienté dans le sens de la route à suivre.

FIG.1

FIG.2

EP 0 258 538 B1

FIG.3

FIG.4

FIG.5